# EUROPEAN PATENT SPECIFICATION

(11) **EP 1 505 296 B1**
(45) Date of publication and mention of the grant of the patent: **26.01.2011**
(21) Application number: 04018299.0
(22) Date of filing: 02.08.2004
(51) Int. Cl.: G01M 13/02, F16H 55/16

(54) **Starting apparatus for internal combustion engine**
Apparat zum Anlassen einer Brennkraftmaschine
Appareil pour démarrer un moteur à combustion interne

(30) Priority: 04.08.2003 JP 2003286262
(43) Date of publication of application: 09.02.2005
(73) Proprietor: Toyota Jidosha Kabushiki Kaisha, Toyota-shi, Aichi-ken, 471-8571 (JP); NIPPON SOKEN, INC., Nishio-shi, Aichi-ken. 445-0012 (JP)
(72) Inventor: Sakai, Kazuhito, Toyota-shi Aichi-ken, 471-8571 (JP); Asada, Toshiaki, Toyota-shi Aichi-ken, 471-8571 (JP); Ezaki, Shuichi, Toyota-shi Aichi-ken, 471-8571 (JP); Ishikawa, Makoto, Toyota-shi Aichi-ken, 471-8571 (JP); Isarai, Ryoji, Nishio-shi Aichi 445-0012 (JP); Ohara, Kouji, Nishio-shi Aichi 445-0012 (JP)
(74) Representative: Kuhnen & Wacker

(56) References cited:
- EP-A- 0 631 048
- US-A- 4 550 603
- US-A- 5 231 307
- PATENT ABSTRACTS OF JAPAN vol. 013, no. 484 (M-886), 2 November 1989 (1989-11-02) & JP 01 190967 A (MITSUBISHI ELECTRIC CORP), 1 August 1989 (1989-08-01)
- PATENT ABSTRACTS OF JAPAN vol. 009, no. 073 (M-368), 3 April 1985 (1985-04-03) & JP 59 203869 A (NIPPON DENSO KK), 19 November 1984 (1984-11-19)
- PATENT ABSTRACTS OF JAPAN vol. 2000, no. 13, 5 February 2001 (2001-02-05) & JP 2000 274337 A (MITSUBISHI MOTORS CORP), 3 October 2000 (2000-10-03)
- PATENT ABSTRACTS OF JAPAN vol. 2000, no. 13, 5 February 2001 (2001-02-05) & JP 2000 274336 A (MITSUBISHI MOTORS CORP), 3 October 2000 (2000-10-03)
- PATENT ABSTRACTS OF JAPAN vol. 2000, no. 07, 29 September 2000 (2000-09-29) & JP 2000 120514 A (KAWASAKI HEAVY IND LTD), 25 April 2000 (2000-04-25)
- PATENT ABSTRACTS OF JAPAN vol. 1999, no. 05, 31 May 1999 (1999-05-31) & JP 11 037254 A (TSUBAKIMOTO CHAIN CO), 12 February 1999 (1999-02-12)
- PATENT ABSTRACTS OF JAPAN vol. 015, no. 382 (P-1257), 26 September 1991 (1991-09-26) & JP 03 152433 A (AGENCY OF IND SCIENCE & TECHNOL), 28 June 1991 (1991-06-28)

## Description

### BACKGROUND OF THE INVENTION

### 1. Field of the Invention

The invention relates to a starting apparatus, in which clutch means is provided in a gear train which connects a rotation drive source and a crank shaft.

### 2. Description of the Related Art

As an example of a starting apparatus for an internal combustion engine, Japanese Patent Laid-Open Publication No. 2000-120514, which constitutes the closest prior art, discloses a so-called constant-mesh starting apparatus in which a gear train is provided in a region from an output shaft of a starting motor as a rotation drive source to a crank shaft, and a one-way clutch is provided in the gear train, whereby a part of gears included in the gear train is rotated together with the crank shaft. In addition, art related to the invention is disclosed in Japanese Patent Laid-Open Publication No. 2002-295591, Japanese Patent Laid-Open Publication No. 11-190401, Japanese Patent No. 2542093, Japanese Patent Laid-Open Publication No. 1-126466, and Japanese Patent Laid-Open Publication No. 4-25059.

In the conventional constant-mesh starting apparatus disclosed in the aforementioned publications, all of gears provided in the region from the crank shaft to the one-way clutch are driven to rotate by the crank shaft while the internal combustion engine is operated. The rotation speed of the crank shaft of the internal combustion engine is periodically changed due to influence of each of intake, compression, expansion, and exhaust strokes. Therefore, the rotation speed of each of the gears driven by the crank shaft is also changed. However, since there is backlash between the gears, a speed difference occurs between the gears while rotation movement is transmitted, tooth portions of the gears repeatedly hit each other due to a fluctuation in the rotation of the crank shaft, and so-called rattling noise occurs. The rattling noise is large when tooth portions made of metal hit each other. When a backlash amount is controlled to be reduced by shim adjustment, the rattling noise can be reduced. However, the shim adjustment is troublesome. Even when the backlash amount is adjusted to an appropriate amount, the backlash amount may be changed due to thermal expansion, which makes it impossible to obtain the expected effect of reducing noise. If the backlash amount is too small, so-called engagement noise that occurs due to friction between the tooth portions may become large. In order to suppress the engagement noise, it is necessary to increase the accuracy of the gears, which leads to an increase in production cost.

EP 0 631 048 A2 discloses a starting apparatus for an internal combustion engine, in which clutch means for inhibiting transmission of rotation form a crank shaft side to a drive source side is provided in a gear train which connects a drive source that generates torque and said crank shaft, suggesting to make an external teeth gear of a plastic member to reduce the noise from the gear coupling between a motor output shaft and a torque transmitting member. By selectively actuating a magnetic switch, a pinion is disengaged from a ring gear after the starting operation so that no idle running and therefore no backlash occurs.

JP 2000 274337 A discloses a scissors gear pinion meshes with a ring gear which in turn rotates a crank shaft via a one-way clutch.

### SUMMARY OF THE INVENTION

It is an object of the invention to provide a starting apparatus for an internal combustion engine which can reduce noise that occurs in a gear.

An aspect of the invention relates to a starting apparatus for an internal combustion engine, in which clutch means for inhibiting transmission of rotation from a crank shaft side to a drive source side is provided in a gear train which connects a drive source that generates rotation movement and a crank shaft. The starting apparatus for an internal combustion engine further includes rattling noise reducing means which is provided in a region from the clutch means in the gear train to the crank shaft.

In the aforementioned starting apparatus for an internal combustion engine, since the rattling noise reducing means is provided in the region from the clutch means to the crank shaft, the rattling noise that occurs in this region can be reduced, and thus noise that occurs in the starting apparatus can be reduced.

In the starting apparatus according to the aspect of the invention, a tooth portion of one gear of at least one gear pair may be made of resin, and a tooth portion of the other gear may be made of metal, the one gear and the other gear being meshed with each other, and the at least one gear pair being provided, as an element constituting the gear train, in the region from the clutch means to the crank shaft, whereby the rattling noise reducing means is realized.

In the case where a tooth portion of one gear of one gear pair is made of resin and the a tooth portion of the other gear is made of metal, the one gear and the other gear being meshed with each other, a shock which is given when both the tooth portions hit each other can be reduced as compared to the case where both the tooth portions are made of metal. Accordingly, rattling noise which occurs between the tooth portion made of resin and the tooth portion made of metal is smaller than rattling noise which occurs between the tooth portions made of metal. Since at least one gear pair composed of a gear whose tooth portion is made of resin and a gear whose tooth portion is made of metal is provided in the region from the crank shaft to the clutch means where the rattling noise occurs due to influence of a fluctuation in the rotation of the crank shaft, the rattling noise can be reduced as compared to the case where tooth portions of all gears in the region are made of metal.

In the starting apparatus according to the aspect of the invention, a tooth portion of each of gears of all gear pairs constituting the gear train may be made of metal in a region from the drive source to the clutch means, and each of all gear pairs constituting the gear train may be composed of a gear whose tooth portion is made of metal and a gear whose tooth portion is made of resin in the region from the clutch means to the crank shaft.

Since the clutch means inhibits transmission of rotation from the crank shaft, a speed difference does not occur between the gears in the region from the drive source to the clutch means. Therefore, when a tooth portion of each of the gears of all the gear pairs is made of metal, the rattling noise is not problematic. Meanwhile, the gears in the region from the drive source to the clutch means are driven to rotate by the drive source when the internal combustion engine is started, and engagement noise occurs due to friction between the tooth portions thereof. The engagement noise is correlated with accuracy of the tooth portions. The engagement noise decreases with an increase in the accuracy. Since the accuracy of the tooth portion made of metal can be increased easily as compared to the accuracy of the tooth portion made of resin, when a tooth portion of each of the gears of all the gear pairs is made of metal in the region from the drive source to the clutch means, the rattling noise can be sufficiently reduced. Further, since each of all the gear pairs is composed of a gear whose tooth portion is made of metal and a gear whose tooth portion is made of resin in the region from the clutch means to the crank shaft, the effect of reducing the rattling noise can be sufficiently improved. Thus, it is possible to realize the gear train which can improve the effect of reducing the rattling noise and the engagement noise.

In the starting apparatus according to the aspect of the invention, a gear ratio between a gear which has the tooth portion made of resin and a corresponding gear which is meshed with the gear, and which has the tooth portion made of metal may be set to a non-integral number.

When rotating, one time, the gear having the larger number of teeth from among the gear which has the tooth portion made of resin and the corresponding gear which is meshed with the gear, and which has the tooth portion made of metal, the gear having the smaller number of teeth is rotated according to the gear ratio. Accordingly, if the gear ratio were set to an integral number, the gear having the smaller number of teeth would be rotated the integral number of times while the gear having the larger number of teeth is rotated one time. In this case, there is a large possibility that teeth of the tooth portions which were meshed with each other before starting rotation are meshed with each other again. Meanwhile, when the gear ratio is set to a non-integral number, teeth of the tooth portions which were meshed with each other before starting rotation are not meshed with each other again until the gear having the larger number of teeth is rotated N times (N is an integral number equal to or larger than 2). Since combination of teeth of the tooth portions which are meshed with each other is changed in this manner, the tooth portion made of resin can be prevented from wearing out unevenly, and thus the lifespan of the tooth portion made of resin can be improved.

Further, the number of teeth of one of the gear which has the tooth portion made of resin and the corresponding gear which is meshed with the gear, and which has the tooth portion made of metal may be set to an odd number and the number of teeth of the other may be set to an even number.

Since the number of teeth of one of the gears which are meshed with each other is set to an odd number and the number of teeth of the other is set to an even number, combination of teeth of tooth portions can be changed in a various manner, and the tooth portion made of resin is effectively prevented from wearing out unevenly.

Also, the gear train may include a crank gear which is rotated coaxially and integrally with the crank shaft, and a tooth portion of the crank gear may be made of metal.

A stop position of the crank gear that is rotated integrally with the crank shaft tends to be in a specific range in the circumferential direction due to influence of compression reaction force that is generated in each cylinder. Paired teeth which are meshed with each other while the internal combustion engine is stopped bear force applied from the drive source when the engine is started next time. Therefore, if the stop position of the crank gear in the circumferential direction is in a specific range, the tooth of the tooth portion of the crank gear which bears the force applied from the drive source is in a specific range. Accordingly, when the tooth portion of the crank gear is made of resin, a specific tooth of the tooth portion particularly wears out. Meanwhile, in regard to the gear corresponding to the crank gear, a tooth of the tooth portion of the gear corresponding to the crank gear, which is meshed with each tooth of the tooth portion of the crank gear, is gradually changed according to the gear ratio while the crank gear is rotated. Thus, the tooth of the tooth portion of the gear corresponding to the crank gear, which is meshed with the tooth portion of the crank gear each time the crank gear is stopped, can be appropriately changed. Therefore, it is possible to avoid a situation where a specific tooth of the tooth portion of the gear corresponding to the crank gear is always meshed with the tooth portion of the crank gear while the internal combustion engine is stopped, and to prevent the tooth portion of the gear corresponding to the crank gear from wearing out unevenly. For these reasons, it is more advantageous for improving the lifetime of the tooth portions to form the tooth portion of the gear corresponding to the crank gear using resin, rather than to form the tooth portion of the crank gear using resin.

In the starting apparatus according to the aspect of the invention, a supplementary gear made of metal that has a supplementary tooth portion whose outline is formed to be smaller than a contracted outline of the tooth portion made of resin which is contracted by elastic limit force is provided coaxially with the gear having the tooth portion made of resin such that the supplementary gear is rotatable integrally with the gear having the tooth portion made of resin, and is radially opposed to the tooth portion made of metal which is meshed with the tooth portion made of resin.

Since the supplementary tooth portion is formed to be smaller than the elastic deformation range of the tooth portion made of resin, if force is applied to the tooth portion made of resin in the elastic deformation range while rotation is transmitted, the tooth portion made of metal is not meshed with the supplementary tooth portion, and the rotation is transmitted between the tooth portion made of metal and the tooth portion made of resin. Meanwhile, if force is applied to the tooth portion made of resin beyond the elastic deformation range and the tooth portion made of resin is broken, the supplementary tooth portion is meshed with the tooth portion made of metal which is radially opposed to the supplementary tooth portion. Thus, instead of the broken tooth portion made of resin, the supplementary tooth portion transmits rotation to the tooth portion made of metal. The supplementary gear needs to have strength required as alternative means that is used when the tooth portion made of resin is broken. In the case where the supplementary gear is made of metal, the supplementary gear can be made sufficiently thin, which suppresses an increase of size of the gear train.

The starting apparatus according to the aspect of the invention may further include abnormality determination means for determining an engagement state between the supplementary tooth portion and the tooth portion made of metal.

When the tooth portion made of resin transmits rotation in the elastic deformation range, the supplementary tooth portion is not meshed with the tooth portion made of metal. Only when the tooth portion made of resin is broken, the supplementary tooth portion is meshed with the tooth portion made of metal. Accordingly, breakage of the tooth portion made of resin can be detected by determining the engagement state between the supplementary tooth portion and the tooth portion made of metal.

The abnormality determination means may perform detection of noise that occurs in the gear train, and may determine the engagement state based on a result of the detection.

When the tooth portion made of resin is broken, and the supplementary tooth portion made of metal is meshed with the tooth portion made of metal which is opposed to the supplementary tooth portion, the noise that occurs in the gear train is clearly changed due to a change in quality of material from the tooth portion made of resin to the tooth portion made of metal, and a change in the backlash amount. The breakage of the tooth portion made of resin can be detected by determining whether such a change is detected.

Further, the abnormality determination means may perform detection of whether the tooth portion made of metal is electrically connected to the supplementary tooth portion due to engagement between the tooth portion made of metal and the supplementary tooth portion, and may determine the engagement state based on a result of the detection.

Both of the supplementary tooth portion made of metal and the tooth portion made of metal are electric conductors. Therefore, it can be determined whether the supplementary tooth portion and the tooth portion made of metal are in contact with each other, and breakage of the tooth portion made of resin can be detected by configuring an electric circuit including the supplementary tooth portion and the tooth portion made of metal, and determining whether both the tooth portions are electrically connected to each other.

### BRIEF DESCRIPTION OF THE DRAWINGS

The above mentioned and other objects, features, advantages, technical and industrial significance of this invention will be better understood by reading the following detailed description of exemplary embodiments of the invention, when considered in connection with the accompanying drawings, in which:
FIG 1 is a perspective view showing a starting apparatus according to a first embodiment of the invention;
FIG 2 is a partial cross sectional view showing a main portion of the starting apparatus in FIG 1;
FIG. 3 is a view showing a main portion of an intermediate gear incorporated in the starting apparatus in FIG. 2;
FIG. 4 is a partial cross sectional view showing a starting apparatus according to a second embodiment of the invention;
FIG. 5 is a partial cross sectional view showing a main portion of an intermediate gear in FIG. 4;
FIG. 6 is a perspective view showing the main portion of the intermediate gear in FIG. 4;
FIG. 7 is a flowchart showing an abnormality determination control routine performed by an ECU in FIG. 4;
FIG. 8 is a partial cross sectional view showing a modified example of the starting apparatus according to the second embodiment of the invention; and

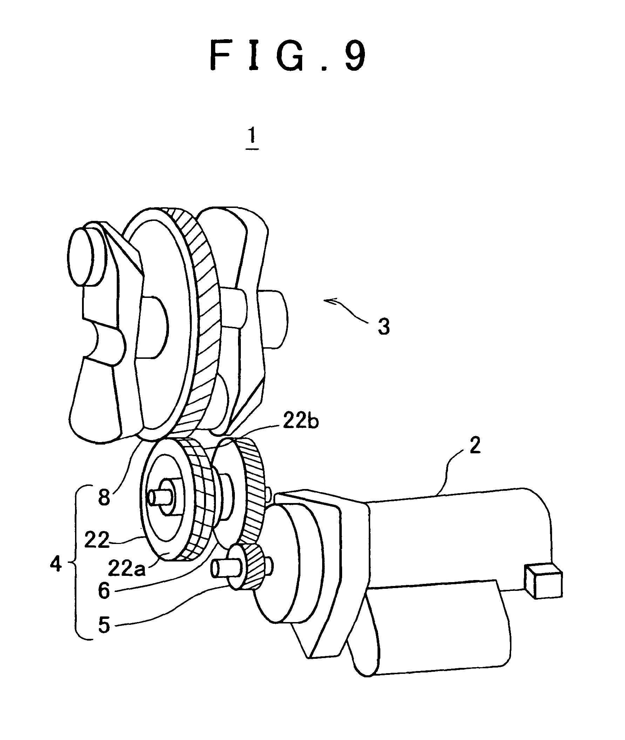

FIG. 9 is a perspective view showing a starting apparatus according to a third embodiment of the invention, which is an example of a starting apparatus in which rattling noise can be reduced using a scissors gear.

### DETAILED DESCRIPTION OF THE PREFERRED EMBODIMENTS

In the following description and the accompanying drawings, the present invention will be described in more detail in terms of exemplary embodiments.

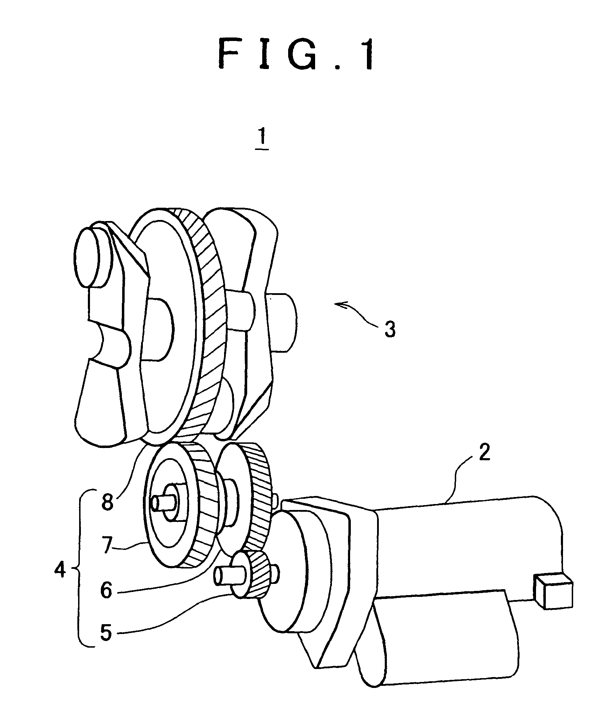

FIG. 1 shows a first embodiment of the invention in which a starting apparatus for an internal combustion engine according to the invention is applied to a reciprocation type internal combustion engine (hereinafter, referred to as "engine") that converts reciprocation movement of a piston to rotation movement. As shown in FIG. 1, a starting apparatus 1 includes a starting motor 2, and a gear train 4 that transmits rotation of an output shaft (not shown) of the starting motor 2 to a crank shaft 3 of the engine. The gear train 4 includes a starter gear 5, a driven gear 6 that is meshed with the starter gear 5, an intermediate gear 7 that is provided coaxially with the driven gear 6, and a crank gear 8 that is meshed with the intermediate gear 7. Each of the gears 5, 6, 7, 8 is a helical gear. The helical gear is a cylindrical gear having a tooth trace that is oblique with respect to a rotation shaft of the gear. The helical gear can transmit rotation smoothly. The gear ratio between the starter gear 5 and the driven gear 6 is set to a non-integral number. The gear ratio between the intermediate gear 7 and the crank gear 8 is set to a non-integral number. Also, each of the gear ratios is set such that the speed of the rotation decreases while the rotation is transmitted from the starting motor 2 side to the crank shaft 3 side. Thus, the speed of the rotation gradually decreases while the rotation of the starting motor 2 is transmitted to the crank shaft 3. Further, the number of teeth of one of the intermediate gear 7 and the crank gear 8 is set to an even number, and the number of teeth of the other is set to an odd number.

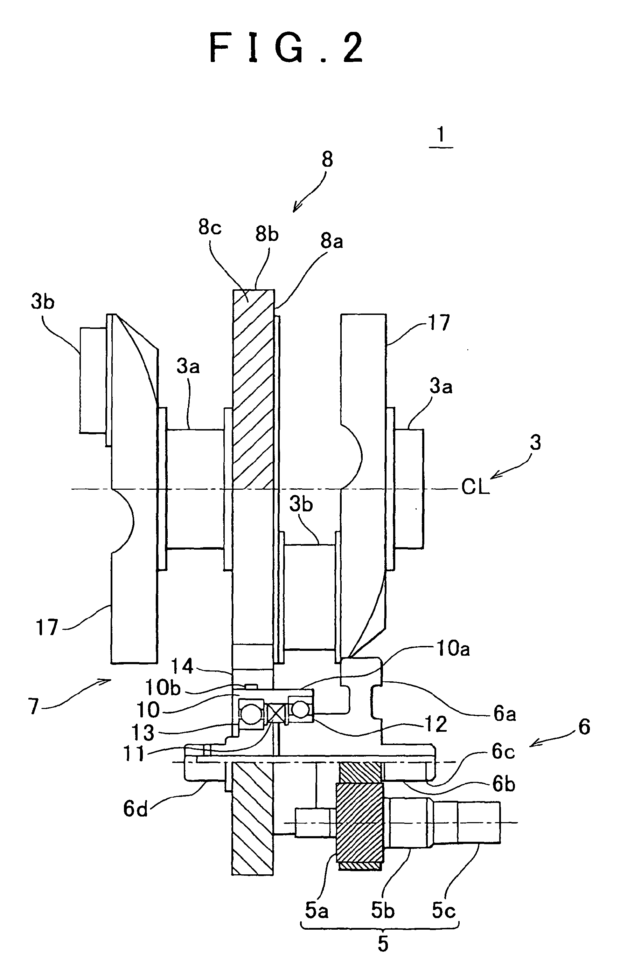

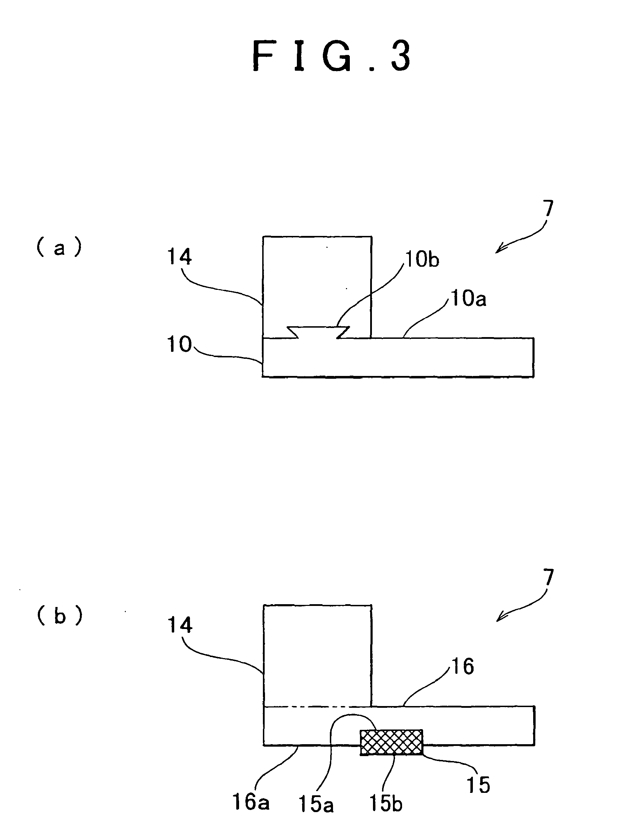

As shown in FIG. 2, the starter gear 5 includes a tooth portion 5a and a starter gear shaft 5b at the center thereof. The tooth portion 5a and the starter gear shaft 5b are integrally formed using metallic material. An end portion 5c of the starter gear shaft 5b is connected to an output shaft of the starting motor 2. The driven gear 6 includes a tooth portion 6a and a support shaft 6b at the center thereof. The tooth portion 6a and the support shaft 6b are integrally formed using metallic material. The support shaft 6b is disposed in parallel with the starter gear shaft 5b and a rotation center line CL of the crank shaft 3. The support shaft 6b is supported so as to be rotatable at end portions 6c and 6d. The intermediate gear 7 is coaxially provided on the support shaft 6b. The intermediate gear 7 includes a hollow insert 10 made of metallic material, and a tooth portion 14 which is positive shifted on an outer peripheral face 10a of the insert 10. As shown in FIG. 3 (a) in detail, after the insert 10 is placed in a die, fused resin is injected so as to cover plural protrusion portions 10b provided on the outer peripheral face 10a in a circumferential direction, and is solidified, whereby the tooth portion 14 is formed. That is, the tooth portion 14 is formed by the so-called insert molding.

As shown in FIG. 2, a one-way clutch 11 as clutch means, and bearings 12 and 13 which are disposed such that the one-way clutch 11 is sandwiched between the bearings 12 and 13 in an axial direction are fitted to the inside of the insert 10. The one-way clutch 11 and the bearings 12 and 13 are integrally combined with the support shaft 6b while the one-way clutch 11 and the bearings 12 and 13 are fitted to the intermediate gear 7. The crank gear 8 is formed integrally with a crank journal 3a, a crank pin 3b, and a balance weight 17 by metal casting. A tooth portion 8c of the crank gear 8 is formed on an outer peripheral face 8b of a disk 8a provided on the rotation center line CL of the crank shaft 3 by gear cutting.

In the starting apparatus 1, the starter gear 5 and the driven gear 6 transmit rotation using engagement between the tooth portions 5a and 6a that are made of metal, and the intermediate gear 7 and the crank gear 8 transmit rotation using engagement between the tooth portion 14 made of resin and the tooth portion 8c made of metal. Also, the one-way clutch 11 permits transmission of rotation from the support shaft 6b to the insert 10, and inhibits transmission of rotation from the insert 10 to the support shaft 6b. Accordingly, when the engine is started, the rotation of the starting motor 2 is transmitted to the starter gear 5, the driven gear 6, the one-way clutch 11, the intermediate gear 7, and the crank gear 8 in this order, whereby the crank shaft 3 is driven to rotate. When the starting motor 2 is stopped after the engine is started, the crank gear 8 and the intermediated gear 7 are driven to rotate by the crank shaft 3, but the transmission of rotation is interrupted by the one-way clutch 11. Thus, the driven gear 6 and the starter gear 5 do not rotate although the starter gear 5, the driven gear 6, the intermediate gear 7, and the crank gear 8 are constantly meshed with each other.

According to the aforementioned embodiment, even when the tooth portions of the crank gear 8 and the intermediate gear 7 hit each other due to a fluctuation in rotation of the crank shaft 3, rattling noise can be reduced, since the metal and the resin hit each other. Since the rattling noise can be reduced even if a backlash amount is not controlled with high accuracy, the gear accuracy of the crank gear 8 can be relaxed, and the production cost of the crank gear 8 can be reduced.

Since the crank gear 8 is made of metal, even when only a specific range of the tooth portion bears force from the starting motor 2 when the engine is started, the tooth portion can be prevented from wearing out unevenly. Also, since the gear ratio between the crank gear 8 and the intermediate gear 7 is set to a non-integral number, it is possible to change a tooth of the tooth portion 14 of the intermediate gear 7 which is meshed with the tooth portion 8c of the crank gear 8 when the engine is started. Further, since the number of teeth of one of the intermediate gear 7 and the crank gear 8 is set to an even number, and the number of teeth of the other is set to an odd number, it is possible to change, in various manners, the tooth of the tooth portion 14 of the intermediate gear 7 which is meshed with the tooth portion 8c of the crank gear 8 when the engine is started. Accordingly, the tooth portion 14 wears out evenly, which is advantageous in improving the lifespan of the tooth portion 14. Also, since the tooth portion 14 is positive shifted, a part of the root of the teeth can be prevented from being constricted, that is, occurrence of so-called undercut can be prevented. Thus, sufficient bend strength of the root of teeth can be obtained.

Since the transmission of rotation from the crank shaft 3 is interrupted by the one-way clutch 11, and the speed difference does not occur between the starter gear 5 and the driven gear 6, the rattling noise can be reduced even if the tooth portion 5a of the starter gear 5 and the tooth portion 6a of the driven gear 6 are made of metal. Also, since the accuracy of the tooth planes of the tooth portions 5a and 6a can be improved easily, engagement noise can be reduced.

The invention is not limited to the aforementioned embodiment, and can be realized in various embodiments. For example, the number of the gears constituting the gear train 4 and the arrangement of the gears can be appropriately changed as required. Even when a gear is added between the crank gear 8 and the intermediate gear 7, it is possible to reduce the rattling noise that occurs in the gears, as long as the gear train disposed on the crank shaft 3 side of the one-way clutch 11 includes a tooth portion made of metal and a tooth portion made of resin that are meshed with each other. The invention is not limited to the tooth portion 8c of the crank gear 8, which is formed by performing gear cutting on material of the crank shaft 3. The tooth portion 8c of the crank gear 8 may be formed in a process different from a process in which the crank shaft 3 is formed, and may be fixed to the crank shaft 3 using a joining method such as press fitting.

When forming the tooth portion 14 of the intermediate gear 7, as shown in FIG. 3(b), the tooth portion 14 and a hollow shaft 16 may be integrally formed by insert molding, by injecting fused resin so as to cover an outer peripheral face 15a of a hollow collar 15 made of metallic material. An inner peripheral face 15b of the collar 15 is exposed from an inner peripheral face 16a of the hollow shaft 16, and the one-way clutch 11 (not shown) is fitted to the inner peripheral face 15b. Instead of forming the collar 15 as a separate component, the insert molding may be performed by injecting fused resin to an outer peripheral face of an outer ring of the one-way clutch 11, and the collar 15 may be omitted. According to these embodiments, since the hollow shaft 16 indicated by a chain double dashed line, which is equivalent to the insert 10 (FIG.3 (a)), is made of resin, the mass of the intermediate gear 7 can be reduced. As a result, the moment of inertia of the intermediate gear 7 can be reduced, which is effective for suppressing torsional resonance caused by torsion torque of the crank shaft.

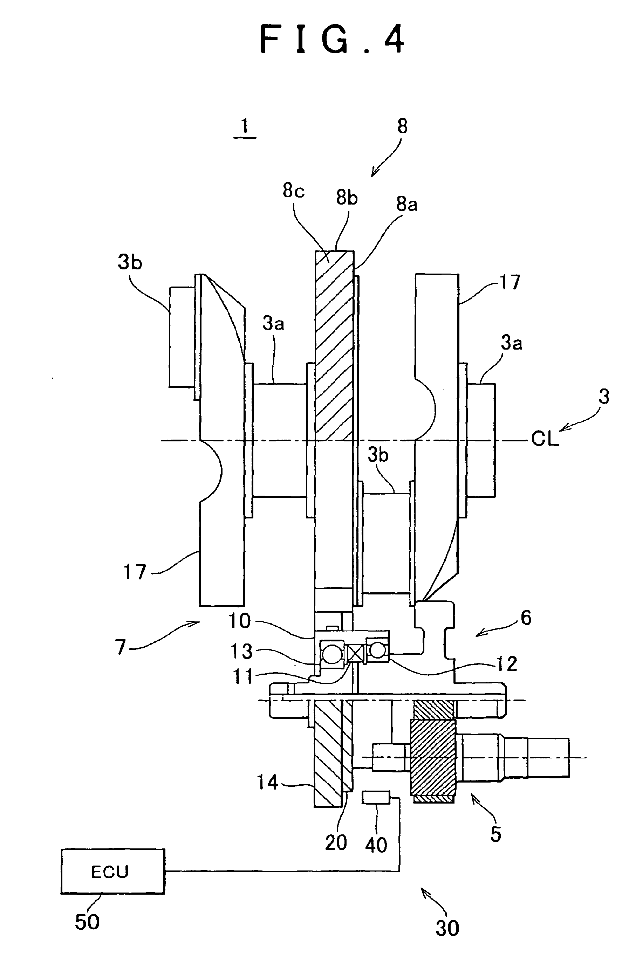

A second embodiment of the invention will be described with reference to FIG. 4 to FIG. 7. The second embodiment is different from the first embodiment in that a supplementary gear 20 is provided coaxially with the intermediate gear 7, and an abnormality determination device 30 which detects breakage of the tooth portion 14 is provided. Therefore, only portions of the second embodiment that are different from those of the first embodiment will be described, and description of the portions of the second embodiment that are the same as in the first embodiment will not be repeated. In FIG. 4 to FIG. 7, portions that are the same as in FIG. 1 to FIG. 3 are denoted by the same reference numerals.

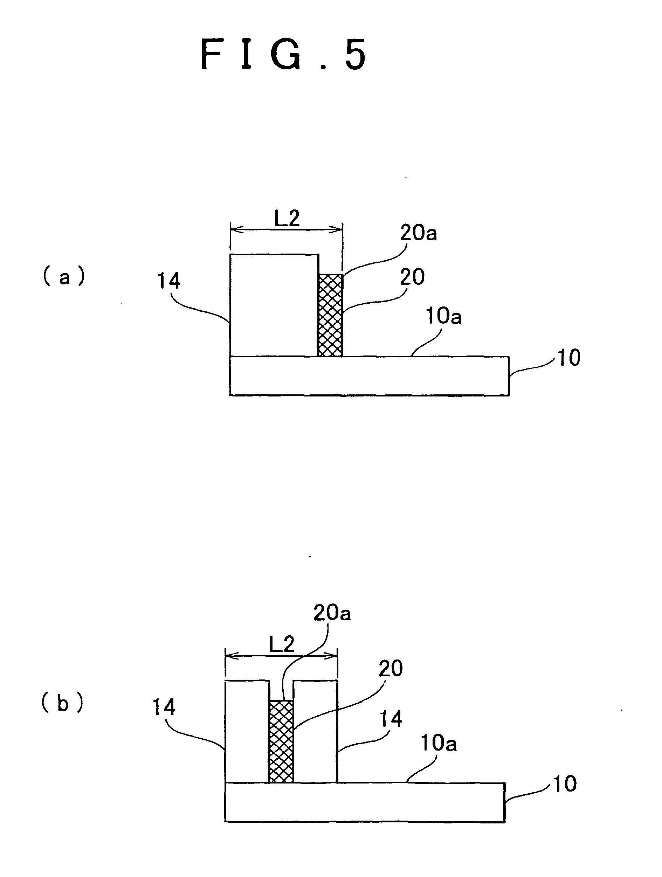

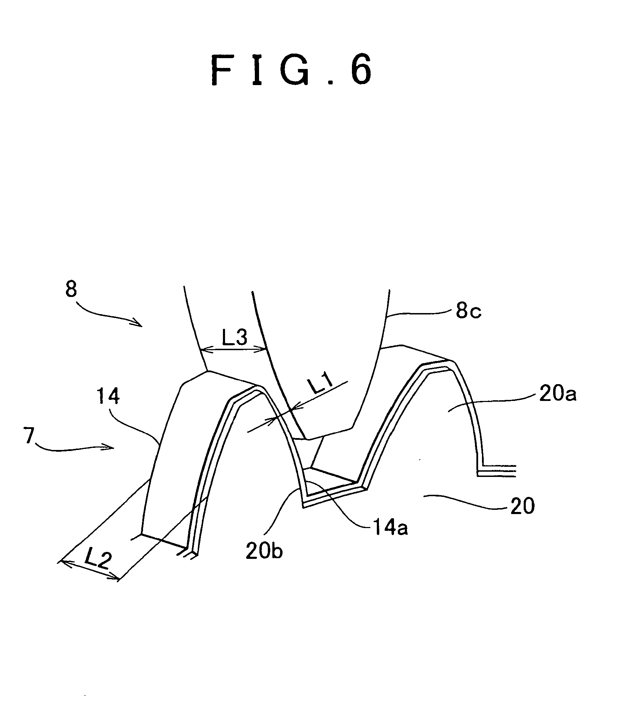

The supplementary gear 20 will be described with reference to FIG. 5 and FIG. 6. As shown in FIG. 5 (a), the supplementary gear 20 is provided on the outer peripheral face 10a of the insert 10 so as to be adjacent to the tooth portion 14. The entire supplementary gear 20 is made of metal, and the supplementary gear 20 is provided on the outer periphery of the insert 10 so as to be rotatable integrally with the insert 10. In order to make the supplementary gear 20 rotatable integrally with the insert 10, the supplementary gear 20 may be formed integrally with the insert 10. Alternatively, the supplementary gear 20 may be produced in a process different from a process in which the insert 10 is produced, and may be fixed to the outer periphery of the insert 10 using a joining method such as shrinkage fitting or press fitting.

As shown in FIG. 6, a supplementary tooth portion 20a is provided in the outer peripheral portion of the supplementary gear 20. An outline of the supplementary gear portion 20a is formed to be smaller than a contracted outline of the tooth portion 14 made of resin which is contracted by force equivalent to elastic limit (i.e., elastic limit force). That is, an outline 20b of the supplementary tooth portion 20a is positioned inside an outline 14a of the tooth portion 14, and a distance L1 between both the outlines 14a and 20b is set to be larger than an amount of elastic deformation of the tooth portion 14, which is caused by external force applied by the tooth portion 8c of the crank gear 8. The external force used for obtaining the amount of elastic deformation is set to the maximum force applied to the tooth portion 14 in a normal use range. The supplementary tooth portion 20a is disposed so as to be opposed to the tooth portion 8c of the crank gear 8 in the radial direction of the supplementary gear 20 so that the supplementary tooth portion 20a can be meshed with the tooth portion 8c of the crank gear 8. Therefore, the thickness of the tooth portion 14 is made small as compared to that in the first embodiment such that a total thickness L2 of the supplementary tooth portion 20a and the tooth portion 14 in the axial direction becomes equal to a thickness L3 of the tooth portion 8c.

In the case where the aforementioned supplementary tooth portion 20a is provided, when the tooth portion 14 is broken due to force applied beyond the elastic deformation range of the tooth portion 14 of the intermediate gear 7 which is applied from the tooth portion 8c of the crank gear 8, the supplementary portion 20a is meshed with the tooth portion 8c, and the supplementary portion 20a can transmit rotation instead of the tooth portion 14. Accordingly, it is possible to avoid a situation in which the engine cannot be started due to breakage of the tooth portion 14 made of resin, and to improve reliability of the starting apparatus against a failure.

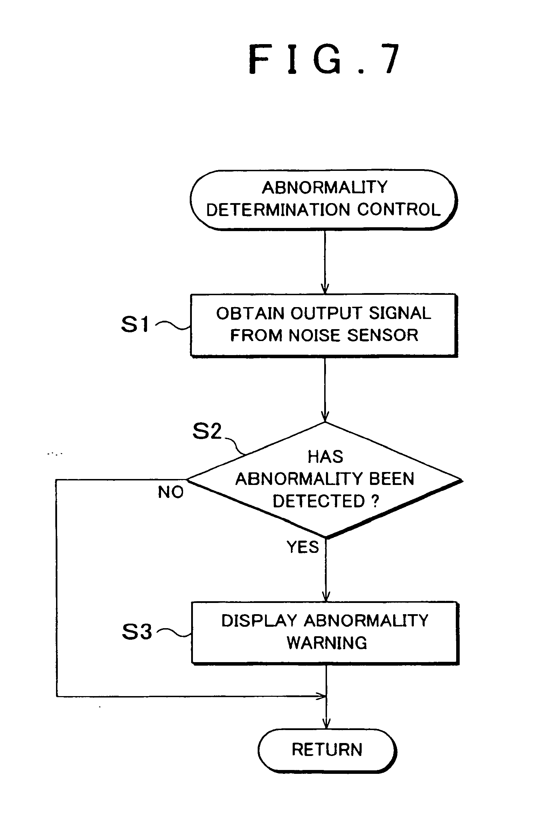

Next, an abnormality determination device 30 will be described with reference to FIG. 4. The abnormality determination device 30 is configured by combining a noise sensor 40 which detects noise caused by engagement in the vicinity of the crank gear 8, with an engine control unit (hereinafter, referred to as ECU) 50. The ECU 50 is provided as a computer which controls an engine operating state (for example, a fuel injection state) according to a program stored in ROM, referring to output signals from a rotation sensor, a coolant temperature sensor, and the like. The ECU 50 functions also as means for determining breakage of the tooth portion 14 by repeatedly performing an abnormality determination control routine shown in FIG. 7 at constant intervals.

Hereinafter, the abnormality determination control routine will be described. In the abnormality determination control routine shown in FIG. 7, first, the ECU 50 obtains an output signal from the noise sensor 40 in step S1. Subsequently, in step S2, it is determined whether an abnormality of the tooth portion 14 has been detected based on the output signal from the noise sensor 40, which has been obtained in step S 1. If the tooth portion 14 is broken and the supplementary tooth portion 20a is meshed with the tooth portion 8c of the crank gear 8, noise different from noise before breakage of the tooth portion 14 occurs due to a difference in quality of material between the tooth portion 14 and the supplementary tooth portion 20a, and a difference in the backlash amount with respect to the tooth portion 8c of the crank gear 8. Accordingly, frequency characteristics of the noise that occurs when the supplementary tooth portion 20a is meshed with the tooth portion 8c are examined in advance, and it is determined whether the noise sensor 40 has detected noise having such frequency characteristics in step S2, whereby it can be determined whether an abnormality has occurred. When an abnormality of the tooth portion 14 has not been detected in step S2, the present routine is terminated. Meanwhile, when an abnormality of the tooth portion 14 has been detected, the routine proceeds to step S3, and a predetermined abnormality warning is displayed, for example, an abnormality notification lump provided on an instrument panel in a vehicle compartment is lit, afterwhich the routine is terminated. Since an abnormality is detected and the warning is given in this manner, it is possible to prevent a situation in which the engine is stopped and started repeatedly with the resin 14 being broken, and to avoid a secondary failure such as a further failure of the starting apparatus.

As the noise sensor 40, any type of sensor such as an electrostatic microphone may be employed as long as the sensor can detect noise that occurs in the gear train 4. As shown in FIG. 5 (b), the supplementary gear 20 may be positioned so as to be sandwiched between the tooth portions 14. Also, in the case where the starting apparatus 1 according to the embodiment of the invention is installed in an engine for a vehicle, and stop and restart of the engine is automatically controlled by a computer, that is, so-called economy running control is performed, the economy running control may be prohibited so as to decrease frequency of transmission of rotation via the supplementary tooth portion 20a, in addition to the display of the abnormality warning in step S3.

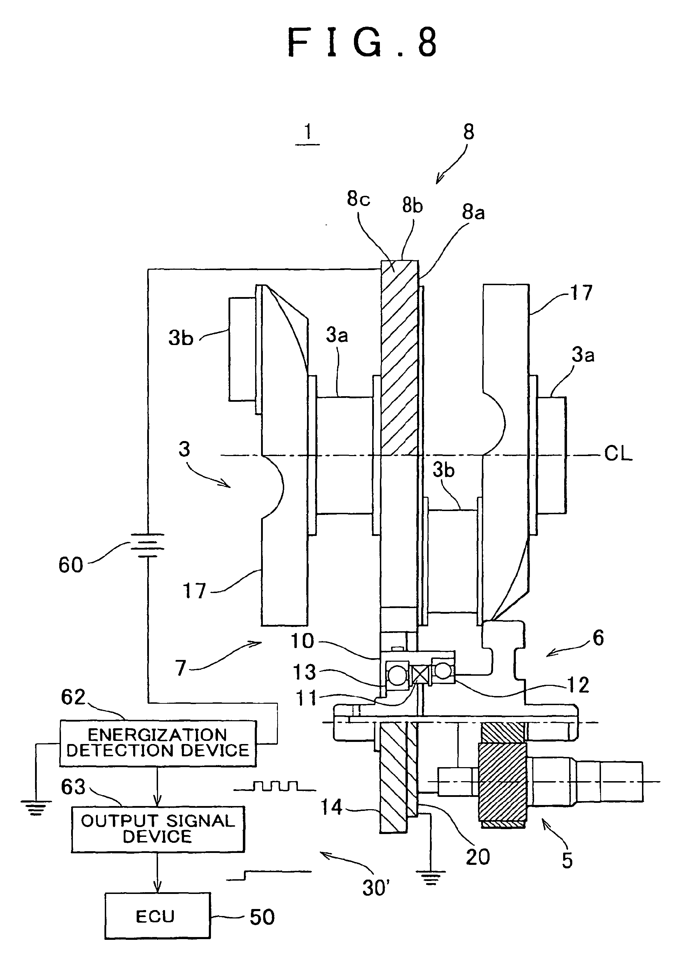

The invention is not limited to the abnormality determination device 30 which detects the engagement state between the supplementary tooth portion 20a and the tooth portion 8c of the crank gear 8 based on noise. The abnormality determination device 30 may determine the engagement state therebetween by widely detecting physical phenomena which vary according to whether there is engagement between the supplementary tooth portion 20a and the tooth portion 8c. Since both of the tooth portions 20a and 8c are made of metal, the engagement state can be determined and breakage of the tooth portion 14 can be detected also by determining whether the tooth portions 20a and 8c are electrically connected to each other. FIG. 8 shows a modified example of the starting apparatus according to the second embodiment of the invention.

In an abnormality determination apparatus 30' in FIG. 8, the tooth portion 8c of the crank gear 8 is connected to one electrode of a power source 60, the supplementary gear 20 is grounded, and the other electrode of the power source 60 is grounded via an energization detection device 62. When the supplementary tooth portion 20a of the supplementary gear 20 and the tooth portion 8c of the crank gear 8 come into contact with each other, and are electrically connected to each other, electric current is applied to the energization detection device 62, whereby a pulsed detection signal is output from the energization detection device 62 to an output signal device 63. The output signal device 63 converts the detection signal to an abnormality detection signal at a given level, and outputs the abnormality detection signal to the ECU 50. The ECU 50 determines whether the abnormality detection signal is output from the output signal device 63, instead of making the determination based on the output from the noise sensor 40 in step S2 in FIG. 7, whereby it can be determined whether the tooth portion 14 is broken.

It may be determined whether the tooth portion 14 is broken by combining abnormality detection using the noise sensor and abnormality detection by applying electric current. In addition, breakage of the tooth portion 14 can be detected by appropriately combining plural detection means.

The invention is not limited to the aforementioned embodiment, and can be realized in various embodiments. The invention is not limited to the crank gear that is formed by performing gear cutting on a crank web. The crank gear may be fitted to the crank shaft, and a position at which the crank gear is fitted to the crank shaft may be appropriately changed. The invention is not limited to the one-way clutch as the clutch means. Any means may be employed as the clutch means, as long as it can inhibit transmission of rotation from the crank shaft side to the drive source side while the engine is operated. The invention is not limited to the configuration of the illustrated gear train in the embodiment. For example, two or more intermediate gears may be provided between the clutch means and the crank gear. In this case, if a tooth portion made of resin and a tooth portion made of metal are meshed with each other at at least one portion in the region from the clutch means to the crank gear, the effect of reducing rattling noise in the invention can be obtained. Meanwhile, another additional gear may be provided in the region from the drive source to the clutch means. Also, in FIG. 1, the driven gear 6 may be omitted, and clutch means may be provided between the starter gear 5 and the output shaft of the starting motor 2.

## Claims

1. A starting apparatus for an internal combustion engine, in which clutch means (11) for inhibiting transmission of rotation from a crank shaft side to a drive source side is provided in a gear train (4) which connects a drive source (2) that generates rotation movement and a crank shaft (3), whereby the starting apparatus is a constant-mesh type apparatus, **characterized by:**
rattling noise reducing means, which is provided between the clutch means (11) in the gear train (4) and the crank shaft (3), said rattling noise reducing means is realized by the gear train (4) including a crank gear (8) which is rotated coaxially and integrally with the crank shaft and a tooth portion (14) of one gear (7) of at least one gear pair (7, 8) being made of resin, and a tooth portion (8c) of the other gear (8) being made of metal, the one gear (7) and the other gear (8) being meshed with each other, and the at least one gear pair (7, 8) being provided, as an element constituting the gear train, between the clutch means and crank shaft.

2. The starting apparatus for an internal combustion engine according to claim 1, **characterized in that** a tooth portion (5a, 6a) of each of gears of all gear pairs (5, 6), constituting the gear train (4), is made of metal between the drive source (2) and the clutch means (11), and each of all gear pairs (7, 8), constituting the gear train (4), is composed of a gear whose tooth portion (8c) is made of metal and a gear whose tooth portion (14) is made of resin between the clutch means (11) and the crank shaft (3).

3. The starting apparatus for an internal combustion engine according to claim 1 or 2, **characterized in that** a gear ratio between a gear (7) which has the tooth portion (14) made of resin and a corresponding gear (8) which is meshed with the gear, and which has the tooth portion (8c) made of metal is set to a non-integral number.

4. The starting apparatus for an internal combustion engine according to claim 3, **characterized in that** the number of teeth of one of the gear (7) which has the tooth portion (14) made of resin and the corresponding gear (8) which is meshed with the gear, and which has the tooth portion (8c) made of metal is set to an odd number and the number of teeth of the other is set to an even number.

5. The starting apparatus for an internal combustion engine according to any one of claims 1 through 4, **characterized in that** a supplementary gear (20) made of metal that has a supplementary tooth portion (20a) whose outline is formed to be smaller than a contracted outline of the tooth portion (14) made of resin which is contracted by elastic limit force is provided coaxially with the gear (7) having the tooth portion (14) made of resin such that the supplementary gear (20) is rotatable integrally with the gear (7) having the tooth portion (14) made of resin, and is radially opposed to the tooth portion (8c) made of metal which is meshed with the tooth portion (14) made of resin.

6. The starting apparatus for an internal combustion engine according to claim 5, **characterized by** further comprising:
abnormality determination means (30, 30') for determining an engagement state between the supplementary tooth portion (20a) and the tooth portion (8c) made of metal.

7. The starting apparatus for an internal combustion engine according to claim 6, **characterized in that** the abnormality determination means (30) performs detection of noise that occurs in the gear train (4), and determines the engagement state based on a result of the detection.

8. The starting apparatus for an internal combustion engine according to claim 6, **characterized in that** the abnormality determination means (30') performs detection of whether the tooth portion (8c) made of metal is electrically connected to the supplementary tooth portion (20a) due to engagement between the tooth portion made of metal (8c) and the supplementary tooth portion (20a), and determines the engagement state based on a result of the detection.

## Patentansprüche

1. Startervorrichtung für einen Verbrennungsmotor, in dem ein Kupplungsmittel (11) zum Hemmen der Übertragung einer Drehung von einer Kurbelwellenseite auf eine Antriebsquellenseite in einem Getriebezug (4) vorgesehen ist, der eine Antriebsquelle (2), die eine drehende Bewegung erzeugt, und eine Kurbelwelle (3) miteinander verbindet, wodurch die Startervorrichtung eine Vorrichtung der Art ist, die einen konstanten Eingriff aufweist, **gekennzeichnet durch** ein Klappergeräusche reduzierendes Mittel, das zwischen dem Kupplungsmittel (11) im Getriebezug (4) und der Kurbelwelle (3) vorgesehen ist, wobei das Klappergeräusche reduzierende Mittel **dadurch** verwirklicht ist, dass der Getriebezug (4) ein Kurbel-Zahnrad (8) aufweist, das sich koaxial und zusammen mit der Kurbelwelle dreht, und ein Zahnabschnitt (14) eines Zahnrads (7) von mindestens einem Zahnradpaar (7, 8) aus Harz gefertigt ist, und ein Zahnabschnitt (8c) des anderen Zahnrads (8) aus Metall gefertigt ist, und das eine Zahnrad (7) und das andere Zahnrad (8) miteinander kämmen, und das mindestens eine Zahnrad (7, 8) als Bestandteil des Getriebezugs zwischen dem Kupplungsmittel und der Kurbelwelle vorgesehen ist.

2. Startervorrichtung für einen Verbrennungsmotor nach Anspruch 1, **dadurch gekennzeichnet, dass** ein Zahnabschnitt (5a, 6a) jedes Zahnrads aller Zahnradpaare (5, 6) zwischen der Antriebsquelle (2) und dem Kupplungsmittel (4), die Bestandteil des Getriebezugs (4) sind, aus Metall gefertigt ist, und jedes Zahnradpaar (7, 8) zwischen dem Kupplungsmittel (11) und der Kurbelwelle (3), das Bestandteil des Getriebezugs (4) ist, aus einem Zahnrad, dessen Zahnabschnitt (8c) aus Metall gefertigt ist, und einem Zahnrad, dessen Zahnabschnitt (14) aus Harz gefertigt ist, besteht.

3. Startervorrichtung für einen Verbrennungsmotor nach Anspruch 1 oder 2, **dadurch gekennzeichnet, dass** ein Zähnezahlverhältnis zwischen einem Zahnrad (7), dessen Zahnabschnitt (14) aus Harz gefertigt ist, und einem entsprechenden Zahnrad (8), das mit diesem Zahnrad kämmt und dessen Zahnabschnitt (8c) aus Metall gefertigt ist, auf keine ganze Zahl gesetzt ist.

4. Startervorrichtung für einen Verbrennungsmotor nach Anspruch 3, **dadurch gekennzeichnet, dass** die Anzahl der Zähne entweder des Zahnrads (7), dessen Zahnabschnitt (14) aus Harz gefertigt ist, oder des entsprechenden Zahnrads (8), das mit diesem Zahnrad kämmt und dessen Zahnabschnitt (8c) aus Metall gefertigt ist, auf eine ungerade Zahl gesetzt ist und die Anzahl der Zähne des jeweils anderen auf eine gerade Zahl gesetzt ist.

5. Startervorrichtung für einen Verbrennungsmotor nach einem der Ansprüche 1 bis 4, **dadurch gekennzeichnet, dass** ein Ergänzungszahnrad (20), das aus Metall gefertigt ist und das einen Ergänzungszahnabschnitt (20a) aufweist, dessen Kontur so ausgebildet ist, dass sie kleiner ist als eine kontrahierte Kontur des aus Harz gefertigten Zahnabschnitts (14), der durch eine Elastizitätsgrenzkraft kontrahiert wird, koaxial mit dem Zahnrad (7) vorgesehen ist, dessen Zahnabschnitt (14) aus Harz gefertigt ist, so dass das Ergänzungszahnrad (20) sich zusammen mit dem aus Harz gefertigten Zahnrad (7) drehen kann und dem Zahnabschnitt (8c), der aus Metall gefertigt ist und der mit dem aus Harz gefertigten Zahnabschnitt (14) kämmt, radial gegenüber liegt.

6. Startervorrichtung für einen Verbrennungsmotor nach Anspruch 5, **dadurch gekennzeichnet, dass** sie ferner aufweist:
ein Anomalie-Erfassungsmittel (30, 30'), das einen Eingriffszustand zwischen dem Ergänzungszahnabschnitt (20a) und dem aus Metall gefertigten Zahnabschnitt (8c) bestimmt.

7. Startervorrichtung für einen Verbrennungsmotor nach Anspruch 6, **dadurch gekennzeichnet, dass** das Anomalie-Erfassungsmittel (30) die Geräusche erfasst, die im Getriebezug (4) auftreten, und aufgrund des Ergebnisses dieser Erfassung den Eingriffszustand bestimmt.

8. Startervorrichtung für einen Verbrennungsmotor nach Anspruch 6, **dadurch gekennzeichnet, dass** das Anomalie-Erfassungsmittel (30') aufgrund eines Eingriffs zwischen dem aus Metall gefertigten Zahnabschnitt (8c) und dem Ergänzungszahnabschnitt (20a) erfasst, ob der aus Metall gefertigte Zahnabschnitt (8c) elektrisch mit dem Ergänzungszahnabschnitt (20a) verbunden ist, und aufgrund eines Ergebnisses dieser Erfassung den Eingriffszustand bestimmt.

## Revendications

1. Appareil de démarrage pour un moteur à combustion interne, où un moyen d'embrayage (11) pour interdire la transmission de rotation d'un côté vilebrequin à un côté source d'entraînement est pourvu dans un train d'engrenages (4) qui relie une source d'entraînement (2) qui génère un mouvement de rotation et un vilebrequin (3), moyen par lequel l'appareil de démarrage est un appareil de type à prise constante, **caractérisé par** :
un moyen de réduction du bruit de cliquetis, qui est prévu entre le moyen d'embrayage (11) dans le train d'engrenages (4) et le vilebrequin (3), ledit moyen de réduction du bruit de cliquetis est réalisé par le train d'engrenages (4) comportant un pignon de vilebrequin (8) qui tourne de manière coaxiale et intégralement avec le vilebrequin et une partie dentée (1') d'un engrenage (7) d'au moins une paire d'engrenages (7, 8) étant faite en résine, et une partie dentée (8c) de l'autre engrenage (8) étant faite en métal, l'engrenage (7) et l'autre engrenage (8) étant engrenés entre eux, et l'au moins une paire d'engrenages (7, 8) étant prévue, comme élément constituant le train d'engrenage, entre le moyen d'embrayage et le vilebrequin.

2. Appareil de démarrage pour un moteur à combustion interne selon la revendication 1, **caractérisé en ce qu'**une partie dentée (5a, 6a) de chacun des embrayages de toutes les paires d'embrayages (5, 6), constituant le train d'engrenages (4), est faite en métal entre la source d'entraînement (2) et le moyen d'embrayage (11), et chacune de toutes les paires d'engrenages (7, 8), constituant le train d'engrenages (4), est composée d'un engrenage dont la partie dentée (8c) est faite en métal et d'un engrenage dont la partie dentée (14) est faite en résine entre le moyen d'embrayage (11) et le vilebrequin (3).

3. Appareil de démarrage pour un moteur à combustion interne selon la revendication 1 ou 2, **caractérisé en ce qu'**un rapport d'engrenage entre un engrenage (7) qui a la partie dentée (14) faite en résine et un engrenage (8) correspondant qui est engrené avec l'engrenage, et qui a la partie dentée (8c) faite en métal est réglé sur nombre non entier.

4. Appareil de démarrage pour un moteur à combustion interne selon la revendication 3, **caractérisé en ce que** le nombre de dents de l'engrenage (7) qui a la partie dentée (14) faite en résine et de l'engrenage (8) correspondant qui est engrené avec l'engrenage, et qui a la partie dentée (8c) faite en métal est réglé à un nombre impair et le nombre de dents de l'autre est réglé à un nombre pair.

5. Appareil de démarrage pour un moteur à combustion interne selon l'une quelconque des revendications 1 à 4, **caractérisé en ce qu'**un engrenage supplémentaire (20) fait en métal qui a une partie dentée (20a) supplémentaire dont le contour est formé de manière à être plus petit qu'un contour contracté de la partie dentée (14) faite en résine qui est contractée par une force limite élastique est pourvu coaxialement avec l'engrenage (7) ayant la partie dentée (14) faite en résine de sorte que l'engrenage supplémentaire (20) puisse tourner intégralement avec l'engrenage (7) ayant la partie dentée (14) faite en résine, et est radialement opposé à la partie dentée (8c) faite en métal qui est engrenée avec la partie dentée (14) faite en résine.

6. Appareil de démarrage pour un moteur à combustion interne selon la revendication 5, **caractérisé par** le fait de comprendre en outre :
un moyen (30, 30') de détermination d'anomalie pour déterminer un état d'engagement entre la partie dentée (20a) supplémentaire et la partie dentée (8c) faite en métal.

7. Appareil de démarrage pour un moteur à combustion interne selon la revendication 6, **caractérisé en ce que** le moyen (30) de détermination d'anomalie effectue une détection du bruit qui se produit dans le train d'engrenages (4), et détermine l'état d'engagement sur la base du résultat de la détection.

8. Appareil de démarrage pour un moteur à combustion interne selon la revendication 6, **caractérisé en ce que** le moyen (30') de détermination d'anomalie détecte si la partie dentée (8c) faite en métal est électriquement connectée à la partie dentée (20a) supplémentaire du fait de l'engagement entre la partie dentée (8c) faite en métal et la partie dentée (20a) supplémentaire, et détermine l'état d'engagement sur la base du résultat de la détection.
